# EUROPEAN PATENT APPLICATION

(11) **EP 4 664 556 A1**
(43) Date of publication of application: **17.12.2025**
(21) Application number: 23931494.1
(22) Date of filing: 07.04.2023
(51) Int. Cl.: H01M 4/505

(54) **SECONDARY BATTERY AND ELECTRICAL DEVICE**

(71) Applicant: Contemporary Amperex Technology Co., Limited, Ningde, Fujian 352100 (CN)
(72) Inventor: HUAN, Shuxing, Ningde, Fujian 352100 (CN); SHEN, Chongheng, Ningde, Fujian 352100 (CN); CHEN, Qiang, Ningde, Fujian 352100 (CN); WU, Changxu, Ningde, Fujian 352100 (CN); LIU, Na, Ningde, Fujian 352100 (CN)
(74) Representative: Gong, Jinping
(86) International application number: PCT/CN2023/086923
(87) International publication number: WO 2024/207433

(57) **Abstract**

Provided in the present application is a secondary battery, comprising a positive electrode plate. The positive electrode plate is provided with a positive electrode active material. The positive electrode active material comprises an agglomerated positive electrode material and a monocrystalline-like positive electrode material. The agglomerated positive electrode material has a volume average particle size Dv50 of 8 µm-15 µm. The agglomerated positive electrode material has a primary particle size of 0.1 µm-0.6 µm. The monocrystalline-like positive electrode material has a volume average particle size Dv50 of 2.5 µm-4 µm. The monocrystalline-like positive electrode material has a primary particle size of 0.8 µm-2 µm. The mass ratio of the agglomerated positive electrode material to the monocrystalline-like positive electrode material is greater than or equal to 1. The present application also relates to a corresponding electrical device. The described secondary battery has a high energy density and an excellent cycle life.

## Description

### TECHNICAL FIELD

The present application relates to the technical field of secondary batteries, and in particular, to a secondary battery and an electric device.

### BACKGROUND

In recent years, with the increasingly widespread application of secondary batteries, they have been extensively used in energy storage power systems such as hydropower, thermal power, wind power, and solar power stations, as well as in various fields such as electric tools, electric bicycles, electric motorcycles, and electric vehicles.

As secondary batteries have achieved great development, higher requirements have been placed on their performance. Secondary batteries with high energy density and long cycle life impose high requirements on the positive electrode plate. For example, the positive electrode plate of a high-energy-density and long-cycle-life secondary battery is expected to exhibit a high compaction density while maintaining a relatively long service life.

Therefore, the development of secondary batteries with high energy density and better cycle life is one of the major areas of interest for those skilled in the art.

### SUMMARY

The present application is made in view of the above problems, and one of its objectives is to provide a secondary battery with high energy density and better cycle life.

To achieve the above objective, a first aspect of the present application provides a secondary battery. The secondary battery includes a positive electrode plate, a positive electrode active material is disposed on the positive electrode plate, and the positive electrode active material includes an agglomerated positive electrode material and a quasi-single crystalline positive electrode material;
a volume average particle size Dv50 of the agglomerated positive electrode material is 8 µm to 15 µm, and a primary particle size of the agglomerated positive electrode material is 0.1 µm to 0.6 µm;
a volume average particle size Dv50 of the quasi-single crystalline positive electrode material is 2.5 µm to 4 µm, and a primary particle size of the quasi-single crystalline positive electrode material is 0.8 µm to 2 µm;
a mass ratio of the agglomerated positive electrode material to the quasi-single crystalline positive electrode material is greater than or equal to 1.

The present application employs the quasi-single crystalline positive electrode material having a Dv50 of 2.5 µm to 4 µm and a primary particle size of 0.8 µm to 2 µm and the agglomerated positive electrode material having a Dv50 of 8 µm to 15 µm and a primary particle size of 0.1 µm to 0.6 µm for gradation at a mass ratio of greater than or equal to 1, such that the positive electrode plate maintains better service life and capacity while ensuring high compaction density of the positive electrode plate, thereby enabling the secondary battery incorporating this positive electrode plate to exhibit high energy density and long cycle life.

In any embodiment, the mass ratio of the agglomerated positive electrode material to the quasi-single crystalline positive electrode material is 1-9:1.

In any embodiment, the mass ratio of the agglomerated positive electrode material to the quasi-single crystalline positive electrode material is 2.3-3:1. In this way, the energy density and cycle life of the secondary battery can be further improved.

In any embodiment, the volume average particle size Dv50 of the quasi-single crystalline positive electrode material is 3 µm to 3.5 µm, and/or the primary particle size of the quasi-single crystalline positive electrode material is 1.2 µm to 1.5 µm. In this way, the energy density of the secondary battery can be improved.

In any embodiment, the primary particle size of the agglomerated positive electrode material is 0.2 µm to 0.4 µm. In this way, the energy density of the secondary battery can be improved.

In any embodiment, a chemical formula of the agglomerated positive electrode material is Liₓ₁Ni_{y1}Co_{z1}M_{1-y1-z1}O₂, where 0.9 ≤ x1 ≤1, 0.9 ≤ y1 ≤ 0.98, 0.05 ≤ z1 ≤ 0.1, and M includes one or more of Mn, Al, B, Zr, Sr, Y, Sb, W, Ti, Mg, and Nb. In this way, the capacity of the positive electrode plate can be further increased, thereby improving the energy density of the secondary battery.

In any embodiment, 0.9 ≤ y1 ≤ 0.96. In this way, the nickel content of the agglomerated positive electrode material is appropriately reduced while ensuring a high capacity of the positive electrode plate.

In any embodiment, a chemical formula of the quasi-single crystalline positive electrode material is Liₓ₂Ni_{y2}Co_{z2}M'_{1-y2-z2}O₂, where 0.9 ≤ x2 ≤ 1, 0.9 ≤ y2 ≤ 0.98, 0.05 ≤ z2 ≤ 0.1, and M' includes one or more of Mn, Al, B, Zr, Sr, Y, Sb, W, Ti, Mg, and Nb. In this way, the capacity of the positive electrode plate can be further increased, thereby improving the energy density of the secondary battery.

In any embodiment, 0.92 ≤ y2 ≤ 0.98. In this way, the capacity of the positive electrode plate can be further increased, thereby improving the energy density of the secondary battery.

In any embodiment, y2 > y1. In this way, under the condition that the overall nickel content of the positive electrode active material is relatively not extremely high, the capacity of the positive electrode plate can be better increased, thereby improving the energy density of the secondary battery.

In any embodiment, a particle size distribution span (Dv90-Dv10)/Dv50 of the agglomerated positive electrode material is ≤ 1.5. In this way, a sufficient filling space can be provided for the positive electrode plate while ensuring optimal specific capacity performance, thereby increasing the capacity of the positive electrode plate, and further improving the energy density of the secondary battery.

In any embodiment, the particle size distribution span (Dv90-Dv10)/Dv50 of the agglomerated positive electrode material is 0.7 to 1.4. In this way, a sufficient filling space can be better provided for the positive electrode plate, thereby increasing the capacity of the positive electrode plate, and further improving the energy density of the secondary battery.

In any embodiment, a BET specific surface area of the agglomerated positive electrode material is 0.2 m²/g to 0.8 m²/g. In this way, excessive active surfaces of the agglomerated positive electrode material can be prevented from contacting the electrolytic solution, and excessive corrosion of the agglomerated positive electrode material by the electrolytic solution is avoided, thereby prolonging the service life of the positive electrode plate, and extending the cycle life of the secondary battery.

In any embodiment, the BET specific surface area of the agglomerated positive electrode material is 0.3 m²/g to 0.6 m²/g. In this way, the service life of the positive electrode plate can be better prolonged, thereby extending the cycle life of the secondary battery.

In any embodiment, a particle size distribution span (Dv90-Dv10)/Dv50 of the quasi-single crystalline positive electrode material is ≥ 1.2. In this way, the compression resistance of the positive electrode plate can be improved, thereby prolonging the service life of the positive electrode plate, and extending the cycle life of the secondary battery.

In any embodiment, the particle size distribution span (Dv90-Dv10)/Dv50 of the quasi-single crystalline positive electrode material is 1.3 to 1.5. In this way, the compression resistance of the positive electrode plate can be better improved, thereby better prolonging the service life of the positive electrode plate, and extending the cycle life of the secondary battery.

In any embodiment, a BET specific surface area of the quasi-single crystalline positive electrode material is 0.8 m²/g to 1.3 m²/g. In this way, a morphology with high dispersity can be achieved, thereby facilitating the improvement of the space utilization rate of the positive electrode plate.

In any embodiment, the BET specific surface area of the quasi-single crystalline positive electrode material is 0.85 m²/g to 1.15 m²/g. In this way, the space utilization rate of the positive electrode plate can be further improved.

In any embodiment, the particle size distribution span (Dv90-Dv10)/Dv50 of the positive electrode active material is 1.5 to 2.1. In this way, the positive electrode plate can achieve a high compaction density and processing performance under a high electrode loading.

In any embodiment, the BET specific surface area of the positive electrode active material is 0.5 m²/g to 0.7 m²/g. In this way, the positive electrode plate can also achieve a high compaction density and processing performance under a high electrode loading, thereby improving the energy density of the secondary battery.

In any embodiment, a mass percentage of the positive electrode active material in the positive electrode film layer of the positive electrode plate is 95% to 99.5%. In this way, the specific capacity performance of the positive electrode active material in the secondary battery can be ensured, thereby increasing the capacity of the positive electrode plate, and improving the energy density of the secondary battery.

In any embodiment, a coating surface density of the positive electrode active material on the positive electrode plate is 21.5 mg/cm² to 32.5 mg/cm². In this way, by employing a thick coating on the positive electrode in combination with a high compaction density, the capacity of the positive electrode plate can be further increased, thereby improving the energy density of the secondary battery.

A second aspect of the present application provides an electric device. The electric device includes the secondary battery according to the first aspect of the present application.

The present application employs the quasi-single crystalline positive electrode material having a Dv50 of 2.5 µm to 4 µm and a primary particle size of 0.8 µm to 2 µm and the agglomerated positive electrode material having a Dv50 of 8 µm to 15 µm and a primary particle size of 0.1 µm to 0.6 µm for gradation at a mass ratio of greater than or equal to 1, such that the positive electrode plate maintains better service life and capacity while ensuring high compaction density of the positive electrode plate, thereby enabling the secondary battery to exhibit high energy density and long cycle life.

### BRIEF DESCRIPTION OF THE DRAWINGS

To better describe and illustrate embodiments and/or examples of the present application, reference may be made to one or more of the drawings. The additional details or examples used to describe the drawings should not be considered as limiting the scope of any one of the disclosed applications, the presently described embodiments and/or examples, and the presently understood best mode of these applications.
FIG. 1 is a schematic diagram of a secondary battery according to one embodiment of the present application;
FIG. 2 is an exploded view of the secondary battery according to one embodiment of the present application as shown in FIG. 1;
FIG. 3 is a schematic diagram of an electric device using a secondary battery as a power source according to one embodiment of the present application.

### Description of the reference numerals:

5, secondary battery; 51, housing; 52, electrode assembly; 53, cover plate; and 6, electric device.

### DETAILED DESCRIPTION

Hereinafter, embodiments of the positive electrode plate and the preparation method therefor, the secondary battery, and the electric device of the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it will be appreciated that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" represents an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions.

Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

The weight described in the specification of the present application may be a unit of weight known in the chemical engineering field such as µg, mg, g, and kg.

Currently, as the application range of secondary batteries becomes increasingly widespread, higher requirements are imposed on the performance of secondary batteries. Energy density and cycle life are two extremely important indicators of the performance of secondary batteries. The energy density and cycle life of conventional secondary batteries need to be improved. Therefore, how to provide a secondary battery with high energy density and long cycle life has become one of the important research directions in the art. In view of this, the present application provides a secondary battery, which, primarily by selecting and proportioning the positive electrode active material in the positive electrode plate, enables the positive electrode plate to have a high compaction density and a long service life as well as a high capacity, thereby enabling the secondary battery to have a high energy density and a long cycle life.

One aspect of the present application provides a secondary battery. The secondary battery includes a positive electrode plate, a positive electrode active material is disposed on the positive electrode plate, and the positive electrode active material includes an agglomerated positive electrode material and a quasi-single crystalline positive electrode material. The volume average particle size Dv50 of the agglomerated positive electrode material is 8 µm to 15 µm, and the primary particle size of the agglomerated positive electrode material is 0.1 µm to 0.6 µm; the volume average particle size Dv50 of the quasi-single crystalline positive electrode material is 2.5 µm to 4 µm, and the primary particle size of the quasi-single crystalline positive electrode material is 0.8 µm to 2 µm; and the mass ratio of the agglomerated positive electrode material to the quasi-single crystalline positive electrode material is greater than or equal to 1.

To enable the secondary battery to achieve a high energy density of 360 Wh/kg to 500 Wh/kg, the use of a high-nickel positive electrode active material and a high coating surface density are required in the design of the secondary battery. Correspondingly, graphite and a high-content silicon-based material are required to serve as the negative electrode active material. However, due to the thick coating design of the positive electrode plate, the secondary battery faces the following two problems: in one aspect, when the coating surface density (CW) of the currently used positive electrode material is large, the compaction density of the positive electrode plate is limited, which is generally < 3.3 g/cm³, thereby leading to a decrease in the energy density of the battery due to the small compaction density of the positive electrode plate; in another aspect, when a polycrystalline material is used as the positive electrode active material, the specific surface area is large and side reactions increase, thereby resulting in a decrease in the cycle performance of lithium-ion batteries with high energy density.

In the above secondary battery of the present application, the positive electrode active material in the positive electrode plate includes an agglomerated positive electrode material and a quasi-single crystalline positive electrode material. The volume average particle size Dv50 of the agglomerated positive electrode material is controlled to be 8 µm to 15 µm, and the primary particle size of the agglomerated positive electrode material is 0.1 µm to 0.6 µm. The volume average particle size Dv50 of the quasi-single crystalline positive electrode material is controlled to be 2.5 µm to 4 µm, and the primary particle size of the quasi-single crystalline positive electrode material is 0.8 µm to 2 µm. Additionally, the mass ratio of the agglomerated positive electrode material to the quasi-single crystalline positive electrode material is controlled to be greater than or equal to 1.

In this way, the agglomerated positive electrode material with a specific volume average particle size Dv50 and a specific primary particle size and a quasi-single crystalline positive electrode material with a specific volume average particle size Dv50 and a specific primary particle size are mixed at a specific mass ratio, where the agglomerated positive electrode material has a larger particle size and serves as a skeleton, thereby improving the capacity of the electrode plate; the quasi-single crystalline positive electrode material has a smaller particle size and can fill the gaps between particles of the agglomerated positive electrode material, thereby improving the compaction density of the positive electrode plate; additionally the service life of the quasi-single crystalline positive electrode material is longer, thus enabling a longer service life of the electrode plate.

By combining the above two different types of positive electrode material active substances with different particle sizes, the interparticle porosity and volume utilization rate can be significantly improved, thereby enhancing the compressive resistance of the positive electrode plate. The agglomerated positive electrode material with the Dv50 of 8 µm to *15* µm can serve as the skeleton of the positive electrode plate. An excessively large particle size tends to cause cracks at the edges of particles and limits the specific capacity performance, whereas an excessively small particle size prevents the agglomerated positive electrode material from serving as a skeleton. The use of the quasi-single crystalline positive electrode material with the Dv50 of 2.5 µm to 4 µm as a secondary filler of the agglomerated positive electrode material can improve space utilization rate. Due to the high dispersibility and pressure resistance, the pores between particles of the agglomerated positive electrode material can be fully filled with the quasi-single crystalline positive electrode material.

Since the specific capacity performance of the high-nickel quasi-single crystalline positive electrode material is lower than that of the agglomerated positive electrode material, and the agglomerated positive electrode material is not pressure-resistant, controlling the mass ratio of the two to be greater than or equal to 1 enables optimal balance between the specific capacity and the compaction density. Additionally, such dense packing is less prone to particle displacement/slippage under high pressure, thereby avoiding significant extension of the electrode plate that would otherwise increase embrittlement.

In addition, the quasi-single crystalline positive electrode material has a Dv50 of 2.5 µm to 4 µm, and a primary particle size of 0.8 µm to 2 µm, which ensures the capacity and service life of the positive electrode while achieving high compaction density of the positive electrode. When the Dv50 of the quasi-single crystalline positive electrode material is excessively large, the compaction density of the electrode plate is decreased. When the primary particle size of the quasi-single crystalline positive electrode material is less than 0.8 µm, excessive primary particles are required for forming the quasi-single crystalline positive electrode material, and the morphology of the quasi-single crystalline positive electrode material is more similar to that of aggregates, resulting in excessive exposure of the active specific surface area of the quasi-single crystalline positive electrode material, such that the quasi-single crystalline positive electrode material is prone to corrosion by electrolytic solution, thereby leading to a decrease in both the service life and the pressure resistance of the positive electrode plate. When the primary particle size of the quasi-single crystalline positive electrode material is greater than 2 µm, excessively few primary particles are required for forming the quasi-single crystalline positive electrode material, the quasi-single crystalline positive electrode material may be composed of only 2 to 3 primary particles, resulting in excessively few exposure of the active specific surface area of the quasi-single crystalline positive electrode material and limited transport path of lithium ions, thereby deteriorating kinetic performance and adversely affecting the capacity and service life of the positive electrode plate.

The present application employs the quasi-single crystalline positive electrode material having a Dv50 of 2.5 µm to 4 µm and a primary particle size of 0.8 µm to 2 µm and the agglomerated positive electrode material having a Dv50 of 8 µm to 15 µm and a primary particle size of 0.1 µm to 0.6 µm for gradation at a mass ratio of 1-9:1, such that the positive electrode plate maintains better service life and capacity while ensuring high compaction density of the positive electrode plate, thereby improving the energy density and cycle life of the secondary battery. The specific capacity range of the positive electrode material in the secondary battery of the present application can reach 215 mAh/g to 230 mAh/g at 0.33 C.

It should be noted that the quasi-single crystalline positive electrode material is an irregular structure formed by the aggregation of several primary particles, and the agglomerated positive electrode material is a regular small sphere formed by a larger number of spherical primary particles with a smaller particle size. It can be understood that the volume average particle size Dv50 of the quasi-single crystalline positive electrode material may be, but is not limited to, 2.5 µm, 2.6 µm, 2.7 µm, 2.8 µm, 2.9 µm, 3.0 µm, 3.1 µm, 3.2 µm, 3.3 µm, 3.4 µm, 3.5 µm, 3.6 µm, 3.7 µm, 3.8 µm, 3.9 µm, or 4 µm. The primary particle size of the quasi-single crystalline positive electrode material may be, but is not limited to, 0.8 µm, 0.9 µm, 1.0 µm, 1.1 µm, 1.2 µm, 1.3 µm, 1.4 µm, 1.5 µm, 1.6 µm, 1.7 µm, 1.8 µm, 1.9 µm, or 2 µm. The volume average particle size Dv50 of the agglomerated positive electrode material may be, but is not limited to, 8 µm, 8.5 µm, 9 µm, 9.5 µm, 10 µm, 10.5 µm, 11 µm, 11.5 µm, 12 µm, 12.5 µm, 13 µm, 13.5 µm, 14 µm, 14.5 µm, or 15 µm. The primary particle size of the agglomerated positive electrode material may be, but is not limited to, 0.1 µm, 0.2 µm, 0.3 µm, 0.4 µm, 0.5 µm, or 0.6 µm. The mass ratio of the agglomerated positive electrode material to the quasi-single crystalline positive electrode material may be, but is not limited to, 1:1, 2:1, 3:1, 4:1, 5:1, 6:1, 7:1, 8:1, or 9:1.

In some embodiments, the mass ratio of the agglomerated positive electrode material to the quasi-single crystalline positive electrode material is 1-9:1. In this way, the energy density and cycle life of the secondary battery can be further improved.

In some embodiments, the mass ratio of the agglomerated positive electrode material to the quasi-single crystalline positive electrode material is 2.3-3:1. This gradation of particle mass ratio can further improve the energy density and cycle life of the secondary battery.

In some embodiments, the volume average particle size Dv50 of the quasi-single crystalline positive electrode material is 3 µm to 3.5 µm, and the primary particle size of the quasi-single crystalline positive electrode material is 1.2 µm to 1.5 µm. In this way, the energy density of a secondary battery using the positive electrode plate is further improved.

In some embodiments, the primary particle size of the agglomerated positive electrode material is 0.2 µm to 0.4 µm. In this way, the energy density and cycle life of the secondary battery are further improved.

In some embodiments, the chemical formula of the agglomerated positive electrode material is Liₓ₁Ni_{y1}Co_{z1}M_{1-y1-z1}O₂, where 0.9 ≤ x1 ≤ 1, 0.9 ≤ y1 ≤ 0.98, 0.05 ≤ z1 ≤ 0.1, and M includes one or more of Mn, Al, B, Zr, Sr, Y, Sb, W, Ti, Mg, and Nb. In this way, a high-nickel active material is employed in the agglomerated positive electrode material, such that the capacity of the positive electrode plate can be increased, thereby improving the energy density of the secondary battery.

It can be understood that x1 in the chemical formula of the agglomerated positive electrode material may be, but is not limited to, 0.9, 0.91, 0.92, 0.93, 0.94, 0.95, 0.96, 0.97, 0.98, 0.99, or 1; y1 in the chemical formula of the agglomerated positive electrode material may be, but is not limited to, 0.9, 0.91, 0.92, 0.93, 0.94, 0.95, 0.96, 0.97, or 0.98; z1 in the chemical formula of the agglomerated positive electrode material may be, but is not limited to 0.05, 0.06, 0.07, 0.08, 0.09, or 0.1.

In some embodiments, in the chemical formula of the agglomerated positive electrode material, 0.9 ≤ y1 ≤ 0.96. Due to the relatively small particle size of the primary particles of the agglomerated positive electrode material, a greater number of grain boundaries are present within the agglomerates, which further facilitates the transport of lithium ions, such that a high capacity can still be achieved when the nickel content is not extremely high.

In some embodiments, the chemical formula of the quasi-single crystalline positive electrode material is Liₓ₂Ni_{y2}Co_{z2}M'_{1-y2-z2}O₂, where 0.9 ≤ x2 ≤ 1, 0.9 ≤ y2 ≤ 0.98, 0.05 ≤ z2 ≤ 0.1, and M' includes one or more of Mn, Al, B, Zr, Sr, Y, Sb, W, Ti, Mg, and Nb. In this way, a high-nickel active material is also employed in the quasi-single crystalline positive electrode material, such that the capacity of the positive electrode plate can be further increased, thereby improving the energy density of the secondary battery.

It can be understood that x2 in the chemical formula of the quasi-single crystalline positive electrode material may be, but is not limited to, 0.9, 0.91, 0.92, 0.93, 0.94, 0.95, 0.96, 0.97, 0.98, 0.99, or 1; y2 in the formula of the quasi-single crystalline positive electrode material may be, but is not limited to, 0.9, 0.91, 0.92, 0.93, 0.94, 0.95, 0.96, 0.97, or 0.98; z2 in the chemical formula of the quasi-single crystalline positive electrode material may be, but is not limited to, 0.05, 0.06, 0.07, 0.08, 0.09, or 0.1.

In some embodiments, 0.92 ≤ y2 ≤ 0.98. Since the primary particle size of the quasi-single crystalline positive electrode material is relatively larger, the particle size of secondary spheres of the quasi-single crystalline positive electrode material is smaller than that of secondary spheres of the agglomerated positive electrode material, and no rapid lithium-ion transport interface is present within the quasi-single crystalline positive electrode material, controlling the nickel content y2 of the quasi-single crystalline positive electrode material to be 0.92 to 0.98 can further increase the capacity of the positive electrode plate, thereby improving the energy density of the secondary battery.

In some embodiments, y2 > y1. That is, the nickel content of the quasi-single crystalline positive electrode material is greater than that of the agglomerated positive electrode material. In this way, under the condition that the overall nickel content of the positive electrode active material is relatively not extremely high, the capacity of the positive electrode plate can be better increased, thereby improving the energy density of the secondary battery.

It should be noted that the element type represented by M in the chemical formula of the quasi-single crystalline positive electrode material and M' in the chemical formula of the agglomerated positive electrode material are different, and their respective roles in the synthesis process of the positive electrode material also differ accordingly. For example, when M and M' are high-valent elements Sb, Nb, and the like, they can serve to refine the grain size, resulting in a smaller particle size of the primary particle of the positive electrode material, thereby further enhancing the capacity and power performance of the positive electrode material. When M and M' are Sr, they can serve as fluxing agents, enabling the positive electrode material to achieve a desired particle size during the sintering process without requiring an excessively high temperature, which reduces the formation of rock-salt phases, and increases both the capacity and the cycle life of the positive electrode plate to some extent. The element type represented by M and M' in the chemical formulas of the positive electrode material may be determined according to actual needs.

In some embodiments, the particle size distribution span (Dv90-Dv10)/Dv50 of the agglomerated positive electrode material is ≤ 1.5. Controlling the particle size distribution span (Dv90-Dv10)/Dv50 of the agglomerated positive electrode material to be ≤ 1.5 can provide sufficient filling space for the positive electrode plate while ensuring optimal specific capacity performance.

It can be understood that the particle size distribution span (Dv90-Dv10)/Dv50 of the agglomerated positive electrode material may be, but is not limited to, 0.1, 0.2, 0.3, 0.4, 0.5, 0.6, 0.7, 0.8, 0.9, 1.0, 1.1, 1.2, 1.3, 1.4, or 1.5.

In some embodiments, the particle size distribution span (Dv90-Dv10)/Dv50 of the agglomerated positive electrode material is 0.7 to 1.4. In this way, a sufficient filling space can be better provided for the positive electrode plate, thereby increasing the specific capacity of the positive electrode plate, and improving the energy density of the secondary battery.

In some embodiments, the BET specific surface area of the agglomerated positive electrode material is 0.2 m²/g to 0.8 m²/g. Controlling the BET specific surface area of the agglomerated positive electrode material to be 0.2 m²/g to 0.8 m²/g, can prevent excessive active surfaces of the agglomerated positive electrode material from contacting the electrolytic solution and avoid excessive corrosion of the agglomerated positive electrode material by the electrolytic solution, thereby prolonging the service life of the positive electrode plate, and extending the cycle life of the secondary battery.

It can be understood that the BET specific surface area of the agglomerated positive electrode material may be, but is not limited to, 0.2 m²/g, 0.3 m²/g, 0.4 m²/g, 0.5 m²/g, 0.6 m²/g, 0.7 m²/g, or 0.8 m ²/g.

In some embodiments, the BET specific surface area of the agglomerated positive electrode material is 0.3 m²/g to 0.6 m²/g. In this way, the service life of the positive electrode plate can be better prolonged, thereby extending the cycle life of the secondary battery.

In some embodiments, the particle size distribution span (Dv90-Dv10)/Dv50 of the quasi-single crystalline positive electrode material is ≥ 1.2. Controlling the particle size distribution span (Dv90-Dv10)/Dv50 of the quasi-single crystalline positive electrode material to be ≥ 1.2 can improve the compression resistance of the positive electrode plate, thereby prolonging the service life of the positive electrode plate, and extending the cycle life of the secondary battery. It can be understood that the particle size distribution span (Dv90-Dv10)/Dv50 of the quasi-single crystalline positive electrode material may be, but is not limited to, 1.2, 1.3, 1.4, 1.5, 1.6, 1.7, 1.8, 1.9, or 2.0.

In some embodiments, the particle size distribution span (Dv90-Dv10)/Dv50 of the quasi-single crystalline positive electrode material is 1.3 to 1.5. In this way, the compression resistance of the positive electrode plate can be better improved, thereby better prolonging the service life of the positive electrode plate, and extending the cycle life of the secondary battery.

In some embodiments, the BET specific surface area of the quasi-single crystalline positive electrode material is 0.8 m²/g to 1.3 m²/g. Controlling the BET specific surface area of the quasi-single crystalline positive electrode material to be within the range of 0.8 m²/g to 1.3 m²/g can achieve a morphology with high dispersibility, thereby improving the space utilization rate of the positive electrode plate. It can be understood that the BET specific surface area of the quasi-single crystalline positive electrode material may be, but is not limited to, 0.8 m²/g, 0.9 m²/g, 1.0 m²/g, 1.1 m²/g, 1.2 m²/g, or 1.3 m²/g.

In some embodiments, the BET specific surface area of the quasi-single crystalline positive electrode material is 0.85 m²/g to 1.15 m²/g. In this way, the space utilization rate of the positive electrode plate can be further improved.

In some embodiments, the particle size distribution span (Dv90-Dv10)/Dv50 of the positive electrode active material is 1.5 to 2.1. In this way, the positive electrode plate can achieve a high compaction density and processing performance under a high electrode loading, thereby improving the energy density of the secondary battery. It can be understood that the particle size distribution span (Dv90-Dv10)/Dv50 of the mixed positive electrode active material may be, but is not limited to, 1.5, 1.6, 1.7, 1.8, 1.9, 2.0, or 2.1.

It should be noted that the volume average particle sizes Dv10, Dv50, and Dv90 of the positive electrode material are well-known concepts in the art. Specifically, Dv10 is a particle size at which the cumulative volume reaches 10% starting from the small particle size side in a volume-based particle size distribution of the powder, typically expressed in µm. Dv50 is a particle size at which the cumulative volume reaches 50% starting from the small particle size side in a volume-based particle size distribution of the powder. Dv90 is a particle size at which the cumulative volume reaches 90% starting from the small particle size side in a volume-based particle size distribution of the powder.

In some embodiments, the BET specific surface area of the positive electrode active material is 0.5 m²/g to 0.7 m²/g. In this way, the positive electrode plate can also achieve a high compaction density and processing performance under a high electrode loading, thereby improving the energy density of the secondary battery. It can be understood that the BET specific surface area of the mixed positive electrode active material may be, but is not limited to, 0.5 m²/g, 0.55 m²/g, 0.6 m²/g, 0.65 m²/g, or 0.7 m²/g. By adopting the above particle size distribution span and the BET specific surface area of the mixed positive electrode active material, the elongation of the positive electrode plate after cold pressing is ≤ 0.8%.

In some embodiments, a mass percentage of the positive electrode active material in the positive electrode film layer of the positive electrode plate is 95% to 99.5%. Controlling the mass percentage of the positive electrode active material in the positive electrode film layer of the positive electrode plate to be 95% to 99.5% can ensure the specific capacity performance of the positive electrode active material in the secondary battery, thereby improving the energy density of the secondary battery. It can be understood that the mass percentage of the positive electrode active material in the positive electrode film layer of the positive electrode plate may be, but is not limited to, 95%, 95.5%, 96%, 96.5%, 97%, 97.5%, 98%, 98.5%, 99%, or 99.5%.

In some embodiments, a coating surface density of the positive electrode active material on the positive electrode plate is 21.5 mg/cm² to 32.5 mg/cm². The positive electrode plate according to the present application can achieve a high compaction density under a high coating surface density of the positive electrode active material. The compaction density of the positive electrode plate can reach more than 3.7 g/cm³, and the elongation of the electrode plate after cold pressing is low, thereby reducing the risk of cracking or other failures of the positive electrode plate during subsequent use. It can be understood that the coating surface density of the positive electrode active material on the positive electrode plate may be, but is not limited to, 21.5 mg/cm², 22 mg/cm², 22.5 mg/cm², 23 mg/cm², 23.5 mg/cm², 24 mg/cm², 24.5 mg/cm², 25 mg/cm², 25.5 mg/cm², 26 mg/cm², 26.5 mg/cm², 27 mg/cm², 27.5 mg/cm², 28 mg/cm², 28.5 mg/cm², 29 mg/cm², 29.5 mg/cm², 30 mg/cm², 30.5 mg/cm², 31 mg/cm², 31.5 mg/cm², 32 mg/cm², or 32.5 mg/cm².

In some embodiments, the positive electrode plate includes a positive electrode current collector, and a metal foil or a composite current collector may be used as the positive electrode current collector. The metal foil may be an aluminum foil, and the composite current collector may include a polymer material substrate and a metal layer formed on at least one surface of the polymer material substrate.

In some embodiments, a method for preparing the positive electrode plate in the secondary battery includes the following steps:
mixing a positive electrode active material with a conductive agent, a binder, and a solvent to form a slurry; and
coating the positive electrode current collector with the slurry, and after drying, performing pressing to obtain the positive electrode plate.

In some embodiments, the mass ratio of the positive electrode active material, the conductive agent, and the binder in the slurry is (90-96):(2-5):(2-5), and the solid content of the slurry is 70% to 99.5%. In this way, through the size gradation of large and small particles of the agglomerated positive electrode material and the quasi-single crystalline positive electrode material in the positive electrode active material, the positive electrode active material, the conductive agent, and the binder are mixed at a specific mass ratio, and the slurry is adjusted to a specific solid content using a solvent. By combining the particle gradation of the positive electrode active material with a specific positive electrode slurry formulation, the performance of the positive electrode active material can be fully utilized, and the compaction density of the positive electrode plate can be better improved.

In some embodiments, the agglomerated positive electrode material and the quasi-single crystalline positive electrode material are placed into a stirring tank at a mass ratio, and a conductive agent and a binder are added for pre-mixing. A solvent is then added, and the mixture is rapidly stirred under vacuum to form a positive electrode slurry. Two surfaces of an aluminum foil serving as the positive electrode current collector are uniformly coated with the positive electrode slurry. The slurry-coated electrode plate is dried at a temperature of 100 °C to 130 °C, and then subjected to cold pressing to obtain the positive electrode plate.

In some embodiments, a lithium source, a high-nickel ternary precursor, and an additive are uniformly mixed in a predetermined ratio in a mixer, and then the mixture is sintered at a temperature of 550 °C to 800 °C under an oxygen atmosphere for 5 h to 20 h to obtain the agglomerated positive electrode material. A lithium source, a high-nickel ternary precursor, and an additive are uniformly mixed in a predetermined ratio in a mixer, and then the mixture is sintered at a temperature of 600 °C to 900 °C under an oxygen atmosphere for 5 h to 20 h to obtain the quasi-single crystalline positive electrode material.

In some embodiments, the conductive agent includes one or more of superconducting carbon, acetylene black, carbon black, Ketjen black, a carbon dot, a carbon nanotube, graphene, and a carbon nanofiber.

In some embodiments, the binder includes one or more of polyvinylidene fluoride, polytetrafluoroethylene, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the secondary battery further includes a negative electrode plate. The negative electrode plate is provided with a negative electrode active material, and the mass percentage of the silicon-based material in the negative electrode active material is 20% to 100%. In this way, by assembling the positive electrode plate of the first aspect of the present application with the negative electrode plate having a high silicon content to form a secondary battery, the secondary battery can achieve a higher energy density. It can be understood that the mass percentage of the silicon-based material in the negative electrode active material may be, but is not limited to, 20%, 30%, 40%, 50%, 60%, 70%, 80%, 90%, or 100%.

A second aspect of the present application provides an electric device, including the secondary battery according to the first aspect of the present application.

Hereinafter, the secondary battery and the electric device of the present application are described with appropriate reference to the drawings.

Unless otherwise specified, the components, the type of material, or the content of the battery mentioned are applicable to both the lithium-ion secondary battery and the sodium-ion secondary battery.

In one embodiment of the present application, provided is a secondary battery.

Typically, a secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte conducts ions between the positive electrode plate and the negative electrode plate. The separator is disposed between the positive electrode plate and the negative electrode plate to primarily prevent the positive and negative electrodes from short-circuiting, while allowing the passage of ions.

### [Positive Electrode Plate]

The positive electrode plate includes a positive electrode current collector and a positive electrode film layer disposed on at least one surface of the positive electrode current collector.

As an example, the positive electrode current collector has two surfaces opposite to each other in its own thickness direction, and the positive electrode film layer is disposed on any one or both of the two opposite surfaces of the positive electrode current collector.

In some embodiments, a metal foil or a composite current collector may be used as the positive electrode current collector. For example, as the metal foil, an aluminum foil may be used. The composite current collector may include a polymer material substrate and a metal layer formed on at least one surface of the polymer material substrate. The composite current collector may be fabricated by forming a metal material on a polymer material substrate. The metal material includes, but is not limited to, aluminum, an aluminum alloy, nickel, a nickel alloy, titanium, a titanium alloy, silver, a silver alloy, and the like. A polymer material substrate (such as polypropylene (PP), polyethylene terephthalate (PET), polybutylene terephthalate (PBT), polystyrene (PS), and polyethylene (PE))

In some embodiments, the positive electrode active material may include a positive electrode active material for use in batteries known in the art.

As an example, a positive electrode active material for a lithium-ion secondary battery may include at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. These positive electrode active materials may be used alone or in combination of two or more. Examples of the lithium transition metal oxide may include, but are not limited to, at least one of a lithium cobalt oxide (such as LiCoO₂), a lithium nickel oxide (such as LiNiO₂), a lithium manganese oxide (such as LiMnO₂ or LiMn₂O₄), a lithium nickel cobalt oxide, a lithium manganese cobalt oxide, a lithium nickel manganese oxide, a lithium nickel cobalt manganese oxide (such as LiNi_{1/3}Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁)), a lithium nickel cobalt aluminum oxide (such as LiNi_{0.85}Co_{0.15}Al_{0.05}O₂), and modified compounds thereof. Examples of the lithium-containing phosphate with an olivine structure may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

As an example, a positive electrode active material for a sodium-ion secondary battery may include at least one of the following materials: at least one of a sodium transition metal oxide, a polyanionic compound, and a Prussian blue compound. However, the present application is not limited to these materials, and other conventional and well-known materials that can be used as positive electrode active materials for sodium batteries may also be used.

As an optional technical solution of the present application, in the sodium transition metal oxide, the transition metal may be at least one of Mn, Fe, Ni, Co, Cr, Cu, Ti, Zn, V, Zr, and Ce. The sodium transition metal oxide is, for example, NaₓMO₂, where M is one or more of Ti, V, Mn, Co, Ni, Fe, Cr, and Cu, and 0 < x ≤ 1.

As an optional technical solution of the present application, the polyanionic compound may be a class of compounds having sodium ions, transition metal ions, and tetrahedral (YO₄)ⁿ⁻ anion units. The transition metal may be at least one of Mn, Fe, Ni, Co, Cr, Cu, Ti, Zn, V, Zr, and Ce; Y may be at least one of P, S, and Si; and n represents the valence state of (YO₄)ⁿ⁻.

The polyanionic compound may also be a class of compounds having sodium ions, transition metal ions, tetrahedral (YO₄)ⁿ⁻ anion units, and halogen anions. The transition metal may be at least one of Mn, Fe, Ni, Co, Cr, Cu, Ti, Zn, V, Zr, and Ce; Y may be at least one of P, S, and Si, and n represents the valence state of (YO₄)ⁿ⁻; and the halogen may be at least one of F, Cl, and Br.

The polyanionic compound may also be a class of compounds having sodium ions, tetrahedral (YO₄)ⁿ⁻ anion units, polyhedral units (ZO_{y})^{m+}, and optionally halogen anions. Y may be at least one of P, S, and Si, and n represents the valence state of (YO₄)ⁿ⁻; Z represents a transition metal, which may be at least one of Mn, Fe, Ni, Co, Cr, Cu, Ti, Zn, V, Zr, and Ce, and m represents the valence state of (ZO_{y})^{m+}; and the halogen may be at least one of F, Cl, and Br.

The polyanionic compound is, for example, NaFePO₄, Na₃V₂(PO4)₃ (sodium vanadium phosphate, referred to as NVP), Na₄Fe₃(PO₄)₂(P₂O₇), NaM'PO4F (M' is one or more of V, Fe, Mn, and Ni), and Na₃(VO_{y})₂(PO₄)₂F_{3-2y}(0 ≤ y ≤ 1).

The Prussian blue compound may be a class of compounds having sodium ions, transition metal ions, and cyanide ions (CN⁻). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are each independently at least one of Ni, Cu, Fe, Mn, Co, and Zn, 0 < a ≤ 2, 0 < b < 1, and 0 < c < 1.

The weight ratio of the positive electrode active material in the positive electrode film layer is 80 wt% to 100 wt% based on the total weight of the positive electrode film layer.

In some embodiments, the positive electrode film layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. The weight ratio of the binder in the positive electrode film layer is 0 wt% to 20 wt% based on the total weight of the positive electrode film layer.

In some embodiments, the positive electrode film layer further optionally includes a conductive agent. As an example, the conductive agent may include at least one of superconducting carbon, acetylene black, carbon black, Ketjen black, a carbon dot, a carbon nanotube, graphene, and a carbon nanofiber. The weight ratio of the conductive agent in the positive electrode film layer is 0 wt% to 20 wt% based on the total weight of the positive electrode film layer.

In some embodiments, the positive electrode plate can be prepared in the following manner: dispersing the components described above for preparing the positive electrode plate, such as the positive electrode active material, the conductive agent, the binder, and any other components, in a solvent (such as N-methylpyrrolidone) to form a positive electrode slurry, where the solid content of the positive electrode slurry is 40 wt% to 80 wt%, and the viscosity at room temperature is adjusted to 5000 mPa s to 25000 mPa s, and coating the surface of the positive electrode current collector with the positive electrode slurry, and after drying, performing cold pressing using a cold rolling mill to form the positive electrode plate.

The thickness T of the positive electrode film can be measured using a micrometer. For example, a micrometer with a model number of Mitutoyo293-100 and a precision of 0.1 µm may be used for measurement. It should be noted that the thickness of the positive electrode film described in the present application refers to the thickness of the positive electrode film which is compacted through cold pressing and used for assembling the positive electrode plate of the battery.

### [Negative Electrode Plate]

A negative electrode plate includes a negative electrode current collector and a negative electrode film layer disposed on at least one surface of the negative electrode current collector, and the negative electrode film layer includes a negative electrode active material.

As an example, the negative electrode current collector has two surfaces opposite to each other in its own thickness direction, and the negative electrode film layer is disposed on any one or both of the two opposite surfaces of the negative electrode current collector.

In some embodiments, a metal foil or a composite current collector may be used as the negative electrode current collector. For example, as the metal foil, a copper foil may be used. The composite current collector may include a polymer material substrate and a metal layer formed on at least one surface of the polymer material substrate. The composite current collector may be fabricated by forming a metal material on a polymer material substrate. The metal material includes, but is not limited to, copper, a copper alloy, nickel, a nickel alloy, titanium, a titanium alloy, silver, a silver alloy, and the like, and the polymer material substrate includes, but is not limited to, polypropylene (PP), polyethylene terephthalate (PET), polybutylene terephthalate (PBT), polystyrene (PS), polyethylene (PE), and the like.

In some embodiments, a negative electrode active material for use in batteries known in the art may be used as the negative electrode active material.

As an example, the negative electrode active material for a lithium-ion secondary battery may include at least one of the following materials: artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin-oxygen compound, and a tin alloy. However, the present application is not limited to these materials, and other conventional materials that can be used as negative electrode active materials for batteries may also be used. These negative electrode active materials may be used alone or in combination of two or more.

As an example, the negative electrode active material for a sodium-ion secondary battery is generally a hard carbon material, two-dimensional metal carbide, or nitride. Preferably, the negative electrode active material for a sodium-ion secondary battery is generally a hard carbon material.

The weight ratio of the negative electrode active material in the negative electrode film layer is 70 wt% to 100 wt% based on the total weight of the negative electrode film layer.

In some embodiments, the negative electrode film layer further optionally includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight ratio of the binder in the negative electrode film layer is 0 wt% to 30 wt% based on the total weight of the negative electrode film layer.

In some embodiments, the negative electrode film layer further optionally includes a conductive agent. The conductive agent may be selected from at least one of superconducting carbon, acetylene black, carbon black, Ketjen black, a carbon dot, a carbon nanotube, graphene, and a carbon nanofiber. The weight ratio of the conductive agent in the negative electrode film layer is 0 wt% to 20 wt% based on the total weight of the negative electrode film layer.

In some embodiments, the negative electrode film layer further optionally includes other auxiliary agents, such as a thickener (e.g., sodium carboxymethylcellulose (CMC-Na)). The weight ratio of the other auxiliary agents in the negative electrode film layer is 0 wt% to 15 wt% based on the total weight of the negative electrode film layer.

In some embodiments, the negative electrode plate can be prepared in the following manner: dispersing the components described above for preparing the negative electrode plate, such as the negative electrode active material, the conductive agent, the binder, and any other components, in a solvent (such as deionized water) to form a negative electrode slurry, where the solid content of the negative electrode slurry is 30 wt% to 70 wt%, and the viscosity at room temperature is adjusted to 2000 mPa s to 10000 mPa s, and coating the negative electrode current collector with the obtained negative electrode slurry, and then performing a drying process and cold pressing (for example, using double rollers) to obtain the negative electrode plate. The unit coating surface density of the negative electrode powder is 75 mg/m² to 220 mg/m², and the compaction density of the negative electrode plate is 1.2 g/m³ to 2.0 g/m³.

The mass M of the negative electrode active material per unit area of the negative electrode film can be weighed out using a standard balance.

The thickness T of the negative electrode film can be measured using a micrometer. For example, a micrometer with a model number of Mitutoyo293-100 and a precision of 0.1 µm may be used for measurement. It should be noted that the thickness of the negative electrode film described in the present application refers to the thickness of the negative electrode film which is compacted through cold pressing and used for assembling the negative electrode plate of the battery.

### [Electrolyte]

The electrolyte conducts ions between the positive electrode plate and the negative electrode plate. The present application has no specific restrictions on the type of the electrolyte, which can be selected according to needs. For example, the electrolyte may be liquid, gel, or all solid.

In some embodiments, the electrolyte is an electrolytic solution. The electrolytic solution includes an electrolyte salt and a solvent.

As an example, the electrolyte salt for a lithium-ion secondary battery may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate (LiPO₂F₂), lithium difluorobis(oxalato)phosphate (LiDFOP), and lithium tetrafluoro(oxalato)phosphate (LiTFOP).

The electrolyte salt for a sodium-ion secondary battery may be selected from one or more of sodium hexafluorophosphate, sodium bis(fluorosulfonyl)imide, sodium bis(trifluoromethanesulfonyl)imide, sodium trifluoromethanesulfonate, sodium tetrafluoroborate, sodium difluorophosphate, sodium perchlorate, and sodium chloride.

The concentration of the electrolyte salt is generally 0.5 mol/L to 5 mol/L.

In some embodiments, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution further optionally includes an additive. The additive may include a negative electrode film-forming additive and a positive electrode film-forming additive, and may further include an additive capable of improving certain properties of the battery, such as an additive for improving the overcharge performance of the battery, and an additive for improving the high- or low-temperature performance of the battery.

### [Separator]

In some embodiments, the secondary battery further includes a separator. The present application does not particularly limit the type of the separator, and any porous-structure separator known to have good chemical stability and mechanical stability may be selected and used.

In some embodiments, the separator may be made of a material selected from at least one of glass fiber, non-woven fabric, polyethylene, polypropylene, and polyvinylidene fluoride. The separator may be a single-layer film or a multi-layer composite film, and there is no particular limitation on this. When the separator is a multi-layer composite film, the materials of the layers may be the same or different, and there is no particular limitation on this.

In some embodiments, the thickness of the separator is 6 µm to 40 µm, optionally 12 µm to 20 µm.

In some embodiments, the positive electrode plate, the negative electrode plate, and the separator may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, and examples of the plastic may include polypropylene, polybutylene terephthalate, polybutylene succinate, and the like.

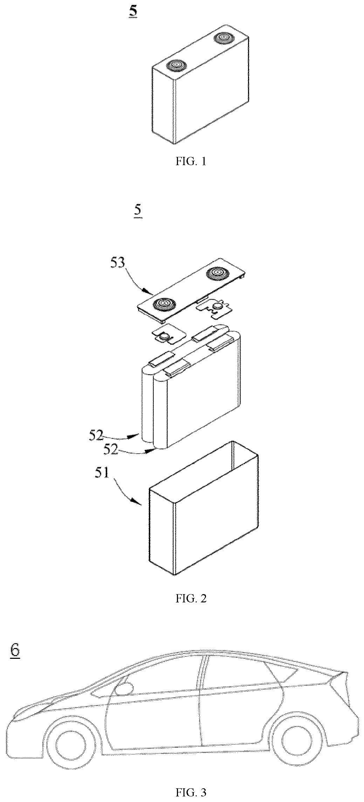

The present application does not particularly limit the shape of the secondary battery, and it may have a cylindrical shape, a prismatic shape, or any other shape. For example, FIG. 1 shows a secondary battery 5 having a prismatic structure as one example.

In some embodiments, referring to FIG. 2, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening in communication with the accommodating cavity, and the cover plate 53 is capable of lidding the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of the electrode assembly 52 included in the secondary battery 5 may be one or more, and those skilled in the art can select the number according to specific and actual needs.

In some embodiments, the secondary battery 5 may be assembled into a battery module. The number of secondary batteries 5 included in the battery module may be one or more, and the specific number may be selected by those skilled in the art based on the use and capacity of the battery module.

In the battery module, a plurality of secondary batteries 5 may be sequentially arranged in a length direction of the battery module. Certainly, the arrangement may also be in any other manner. Further, the plurality of secondary batteries 5 may be fixed by a fastener.

Optionally, the battery module may further include a shell having an accommodating space in which the plurality of secondary batteries 5 are accommodated.

In some embodiments, the battery module described above may also be assembled into a battery pack. The number of battery modules included in the battery pack may be one or more, and the specific number may be selected by those skilled in the art based on the use and capacity of the battery pack.

The battery pack may include a battery case and a plurality of battery modules disposed in the battery case. The battery case includes an upper case body and a lower case body. The upper case body is capable of lidding the lower case body to form a closed space for accommodating the battery modules. The plurality of battery modules may be arranged in any manner in the battery case.

In addition, the present application further provides an electric device. The electric device includes at least one of the secondary battery, the battery module, or the battery pack provided in the present application. The secondary battery, the battery module, or the battery pack may be used as a power source for the electric device, and they may also be used as an energy storage unit for the electric device. The electric device may include, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

As the electric device, a secondary battery, a battery module, or a battery pack may be selected based on its use requirements.

FIG. 3 shows an electric device as one example. The electric device is a pure electric vehicle, a hybrid electric vehicle, a plug-in hybrid electric vehicle, or the like. To meet the requirements of the electric device for high power and high energy density of the secondary battery, the battery pack or the battery module may be used.

As another example, the device may be a mobile phone, a tablet computer, a laptop computer, or the like. The device is generally required to be light and thin, and a secondary battery can thus be used as a power source.

The following are some embodiments.

In order to make the technical problems to be addressed, the technical solutions, and the beneficial effects of the present application more apparent, the present application is further described in detail below with reference to the drawings and embodiments. Apparently, the described embodiments are merely some embodiments of the present application, rather than all of the embodiments. The following description of at least one exemplary embodiment is merely illustrative and is in no way intended to limit the present application and the application thereof. Based on the embodiments in the present application, all other embodiments obtained by those of ordinary skills in the art without creative work shall fall within the protection scope of the present application.

The embodiments without techniques or conditions specified therein are implemented according to techniques or conditions described in the literature in the art or according to product instructions. Reagents or instruments used herein without specified manufacturers are all commercially available conventional products.

### I. Examples

### Example 1:

### 1) Positive electrode plate

The positive electrode active material was a mixture of an agglomerated positive electrode material with a Dv50 of 12 µm (a primary particle size of 0.4 µm) and a quasi-single crystalline positive electrode material with a Dv50 of 3 µm (a primary particle size of 1.2 µm) at a mass ratio of 7:3.

The chemical formula of the agglomerated positive electrode material was Liₓ₁Ni_{y1}Co_{z1}M_{1-y1-z1}O₂, and the chemical formula of the quasi-single crystalline positive electrode material was Liₓ₂Ni_{y2}Co_{z2}M'_{1-y2-z2}O₂, where x1 was 1, y1 was 0.93, z1 was 0.05, x2 was 1, y2 was 0.91, and z2 was 0.07; the particle size distribution span (Dv90-Dv10)/Dv50 of the agglomerated positive electrode material was 1.25, and the particle size distribution span (Dv90-Dv10)/Dv50 of the quasi-single crystalline positive electrode material was 1.35; the BET specific surface area of the agglomerated positive electrode material was 0.56 m²/g, and the BET specific surface area of the quasi-single crystalline positive electrode material was 1.05 m²/g; the particle size distribution span (Dv90-Dv10)/Dv50 of the mixed positive electrode active material was 1.78, and its BET specific surface area was 0.66 m²/g.

The above positive electrode active material was placed into a 5 L stirring tank, and then a conductive agent acetylene black (SP) and a binder polyvinylidene fluoride (PVDF) were added for premixing for 30 min. A solvent N-methylpyrrolidone (NMP) was then added, and the mixture was rapidly stirred under vacuum to form a positive electrode slurry. The mass ratio of the positive electrode active material:acetylene black:polyvinylidene fluoride was 96:2:2, and the solid content of the slurry was 70%.

Two surfaces of an aluminum foil serving as the positive electrode current collector with a thickness of 12 µm were uniformly coated with the positive electrode slurry. The coated electrode plate was dried for half an hour using an oven at a temperature of 100 °C to 130 °C, and then cold pressed using a roller to obtain the positive electrode plate. The active material loading of the positive electrode film layer on the electrode plate was 21.5 mg/cm².

### 2) Negative electrode plate

Negative electrode active materials graphite and the silicon-carbon material carbon black (SP), styrene-butadiene rubber (SBR), and carboxymethyl cellulose (CMC) were dissolved in a deionized water solvent at a weight ratio of 95:2:2:1. The mixture was stirred to obtain a uniformly dispersed negative electrode slurry. The surface of a copper foil serving as the negative electrode current collector was uniformly coated with the negative electrode slurry, followed by drying, cold pressing, and cutting to obtain the negative electrode plate. The mass percentage of the silicon-carbon material in the negative electrode active material was 30%.

### 3) Separator

A porous polymer film made of polyethylene (PE) was used as the separator.

### 4) Electrolytic solution

In a glove box under an argon atmosphere, a corresponding electrolytic solution was obtained by mixing the following components by mass percent (%) based on the mass of electrolytic solution: 8% lithium hexafluorophosphate (LiPF₆), 2% vinylene carbonate (VC), 0.5% hexamethylene diisocyanate (HDI), 25% ethylene carbonate (EC), 10% dimethyl carbonate (DMC), and 20% ethyl methyl carbonate (EMC), with the balance being diethyl carbonate (DEC) to make up 100%.

### 5) Battery assembly

The positive electrode plate, the separator, and the negative electrode plate were sequentially stacked and wounded to obtain a bare cell. The bare cell was placed into a battery shell, followed by injection of the electrolytic solution and performing a formation process, thereby obtaining a secondary battery.

### Example 2:

This example was substantially the same as Example 1, except that the Dv50 of the agglomerated positive electrode material in the positive electrode active material was different. The Dv50 of the agglomerated positive electrode material in this example was 8.2 µm.

### Example 3:

This example was substantially the same as Example 1, except that the particle size of primary particles of the agglomerated positive electrode material in the positive electrode active material was different. The particle size of the primary particles of the agglomerated positive electrode material in this example was 0.2 µm.

### Example 4:

This example was substantially the same as Example 1, except that the particle size distribution span (Dv90-Dv10)/Dv50 (SPAN) of the agglomerated positive electrode material in the positive electrode active material was different. The SPAN of the agglomerated positive electrode material in this example was 1.39.

### Example 5:

This example was substantially the same as Example 1, except that the molecular formula of the agglomerated positive electrode material in the positive electrode active material was different. In the molecular formula of the agglomerated positive electrode material in this example, y1 was 0.98 and z1 was 0.01.

### Example 6:

This example was substantially the same as Example 1, except that the BET specific surface area of the agglomerated positive electrode material in the positive electrode active material was different. The BET specific surface area of the agglomerated positive electrode material in this example was 0.78 m²/g.

### Example 7:

This example was substantially the same as Example 1, except that the Dv50 of the quasi-single crystalline positive electrode material in the positive electrode active material was different. The Dv50 of the quasi-single crystalline positive electrode material in this example was 3.8 µm.

### Example 8:

This example was substantially the same as Example 1, except that the particle size of primary particles of the quasi-single crystalline positive electrode material in the positive electrode active material was different. The particle size of the primary particles of the quasi-single crystalline positive electrode material in this example was 0.9 µm.

### Example 9:

This example was substantially the same as Example 1, except that the particle size distribution span (Dv90-Dv10)/Dv50 (SPAN) of the quasi-single crystalline positive electrode material in the positive electrode active material was different. The SPAN of the quasi-single crystalline positive electrode material in this example was 1.47.

### Example 10:

This example was substantially the same as Example 1, except that the molecular formula of the quasi-single crystalline positive electrode material in the positive electrode active material was different. In the molecular formula of the quasi-single crystalline positive electrode material in this example, y2 was 0.97 and z2 was 0.02.

### Example 11:

This example was substantially the same as Example 1, except that the BET specific surface area of the quasi-single crystalline positive electrode material in the positive electrode active material was different. The BET specific surface area of the quasi-single crystalline positive electrode material in this example was 0.85 m²/g.

### Example 12:

This example was substantially the same as Example 1, except that the mass ratio of the agglomerated positive electrode material to the quasi-single crystalline positive electrode material in the positive electrode active material was different. The mass ratio of the agglomerated positive electrode material to the quasi-single crystalline positive electrode material in this example was 8:2.

### Example 13:

This example was substantially the same as Example 1, except that the particle size distribution span (Dv90-Dv10)/Dv50 (SPAN) of the mixed positive electrode active material was different. The SPAN of the positive electrode active material in this example was 2.03.

### Example 14:

This example was substantially the same as Example 1, except that the BET specific surface area of the mixed positive electrode active material was different. The BET specific surface area of the positive electrode active material in this example was 0.52 m²/g.

### Example 15:

This example was substantially the same as Example 1, except that the content of the silicon-based material in the negative electrode active material of the negative electrode plate was different. The mass content of the silicon-based material in the negative electrode active material in this example was 90%.

### Example 16:

In this example, the Dv50 of the agglomerated positive electrode material was 14.9 µm, the particle size of primary particles of the agglomerated positive electrode material was 0.3 µm, the SPAN of the agglomerated positive electrode material was 0.72, in the molecular formula of the agglomerated positive electrode material, y1 was 0.94 and z1 was 0.05, and the BET specific surface area of the agglomerated positive electrode material was 0.3 m²/g; the Dv50 of the quasi-single crystalline positive electrode material was 3.5 µm, the particle size of primary particles of the quasi-single crystalline positive electrode material was 1.5 µm, the SPAN of the quasi-single crystalline positive electrode material was 1.44, in the molecular formula of the quasi-single crystalline positive electrode material, y2 was 0.92 and z2 was 0.06, and the BET specific surface area of the quasi-single crystalline positive electrode material was 0.9 m²/g; the mass ratio of the agglomerated positive electrode material to the quasi-single crystalline positive electrode material was 65:35, the SPAN of the positive electrode active material was 1.55, the BET specific surface area of the positive electrode active material was 0.53 m²/g, the mass content of the silicon-based material in the negative electrode active material was 50%, and the remainder was the same as in Example 1.

### Example 17:

In this example, the Dv50 of the agglomerated positive electrode material was 9.5 µm, the particle size of primary particles of the agglomerated positive electrode material was 0.13 µm, the SPAN of the agglomerated positive electrode material was 1.33, in the molecular formula of the agglomerated positive electrode material, y1 was 0.94 and z1 was 0.05, and the BET specific surface area of the agglomerated positive electrode material was 0.2 m²/g; the Dv50 of the quasi-single crystalline positive electrode material was 3.5 µm, the particle size of primary particles of the quasi-single crystalline positive electrode material was 1.5 µm, the SPAN of the quasi-single crystalline positive electrode material was 1.44, in the molecular formula of the quasi-single crystalline positive electrode material, y2 was 0.92 and z2 was 0.06, and the BET specific surface area of the quasi-single crystalline positive electrode material was 0.83 m²/g; the mass ratio of the agglomerated positive electrode material to the quasi-single crystalline positive electrode material was 75:25, the SPAN of the positive electrode active material was 1.9, the BET specific surface area of the positive electrode active material was 0.53 m²/g, the mass content of the silicon-based material in the negative electrode active material was 50%, and the remainder was the same as in Example 1.

### Example 18:

In this example, the Dv50 of the agglomerated positive electrode material was 9.5 µm, the particle size of primary particles of the agglomerated positive electrode material was 0.3 µm, the SPAN of the agglomerated positive electrode material was 1.33, in the molecular formula of the agglomerated positive electrode material, y1 was 0.94 and z1 was 0.05, and the BET specific surface area of the agglomerated positive electrode material was 0.45 m²/g; the Dv50 of the quasi-single crystalline positive electrode material was 3.5 µm, the particle size of primary particles of the quasi-single crystalline positive electrode material was 1.5 µm, the SPAN of the quasi-single crystalline positive electrode material was 1.44, in the molecular formula of the quasi-single crystalline positive electrode material, y2 was 0.92 and z2 was 0.06, and the BET specific surface area of the quasi-single crystalline positive electrode material was 1.14 m²/g; the mass ratio of the agglomerated positive electrode material to the quasi-single crystalline positive electrode material was 7:3, the SPAN of the positive electrode active material was 1.9, the BET specific surface area of the positive electrode active material was 0.68 m²/g, the mass content of the silicon-based material in the negative electrode active material was 50%, and the remainder was the same as in Example 1.

### Example 19:

In this example, the Dv50 of the agglomerated positive electrode material was 9.5 µm, the particle size of primary particles of the agglomerated positive electrode material was 0.56 µm, the SPAN of the agglomerated positive electrode material was 1.33, in the molecular formula of the agglomerated positive electrode material, y1 was 0.94 and z1 was 0.05, and the BET specific surface area of the agglomerated positive electrode material was 0.45 m²/g; the Dv50 of the quasi-single crystalline positive electrode material was 3.5 µm, the particle size of primary particles of the quasi-single crystalline positive electrode material was 1.9 µm, the SPAN of the quasi-single crystalline positive electrode material was 1.44, in the molecular formula of the quasi-single crystalline positive electrode material, y2 was 0.92 and z2 was 0.06, and the BET specific surface area of the quasi-single crystalline positive electrode material was 0.9 m²/g; the mass ratio of the agglomerated positive electrode material to the quasi-single crystalline positive electrode material was 8:2, the SPAN of the positive electrode active material was 1.9, the BET specific surface area of the positive electrode active material was 0.53 m²/g, the mass content of the silicon-based material in the negative electrode active material was 50%, and the remainder was the same as in Example 1.

### Example 20:

In this example, the Dv50 of the agglomerated positive electrode material was 9.5 µm, the particle size of primary particles of the agglomerated positive electrode material was 0.3 µm, the SPAN of the agglomerated positive electrode material was 1.33, in the molecular formula of the agglomerated positive electrode material, y1 was 0.94 and z1 was 0.05, and the BET specific surface area of the agglomerated positive electrode material was 0.45 m²/g; the Dv50 of the quasi-single crystalline positive electrode material was 2.6 µm, the particle size of primary particles of the quasi-single crystalline positive electrode material was 1.5 µm, and the SPAN of the quasi-single crystalline positive electrode material was 1.44, in the molecular formula of the quasi-single crystalline positive electrode material, y2 was 0.92 and z2 was 0.06, and the BET specific surface area of the quasi-single crystalline positive electrode material was 1.26 m²/g; the mass ratio of the agglomerated positive electrode material to the quasi-single crystalline positive electrode material was 7:3, the SPAN of the positive electrode active material was 2.07, the BET specific surface area of the positive electrode active material was 0.53 m²/g, the mass content of the silicon-based material in the negative electrode active material was 50%, and the remainder was the same as in Example 1.

### Comparative Example 1:

In this comparative example, the Dv50 of the agglomerated positive electrode material was 9 µm, the particle size of primary particles of the agglomerated positive electrode material was 0.2 µm, the SPAN of the agglomerated positive electrode material was 1.2, in the molecular formula of the agglomerated positive electrode material, y1 was 0.94 and z1 was 0.05, and the BET specific surface area of the agglomerated positive electrode material was 0.45 m²/g; the Dv50 of the quasi-single crystalline positive electrode material was 3.3 µm, the particle size of primary particles of the quasi-single crystalline positive electrode material was 0.7 µm, the SPAN of the quasi-single crystalline positive electrode material was 1.4, in the molecular formula of the quasi-single crystalline positive electrode material, y2 was 0.93 and z2 was 0.06, and the BET specific surface area of the quasi-single crystalline positive electrode material was 0.95 m²/g; the mass ratio of the agglomerated positive electrode material to the quasi-single crystalline positive electrode material was 8:2, the SPAN of the positive electrode active material was 1.94, the BET specific surface area of the positive electrode active material was 0.61 m²/g, the mass content of the silicon-based material in the negative electrode active material was 40%, and the remainder was the same as in Example 1.

### Comparative Example 2:

This comparative example was substantially the same as Comparative Example 1, except that only the agglomerated positive electrode material was used as the positive electrode material and no quasi-single crystalline positive electrode material was used, the total amount of the positive electrode active material remained the same, and the compaction density of the positive electrode plate was different.

### Comparative Example 3:

This comparative example was substantially the same as Comparative Example 1, except that only the quasi-single crystalline positive electrode material was used as the positive electrode material and no agglomerated positive electrode material was used, the primary particle size of the quasi-single crystalline positive electrode material was 1.2 µm, the total amount of the positive electrode active material remained the same, and the compaction density of the positive electrode plate was different.

### II. Test method

### 1) Dv10, Dv50, and Dv90 tests

The volume average particle sizes Dv10, Dv50, and Dv90 of the particle can be measured using methods known in the art. As an example, reference may be made to the GB/T 19077-2016/ISO 13320:2009 *Particle size analysis-Laser diffraction methods,* and the Malvern 3000 device may be used for measurement.

### 2) BET specific surface area test

The BET specific surface area of the particle can be measured using methods known in the art. As an example, reference may be made to GB/T 19587-2017 *Determination of the specific surface area of solids by gas adsorption using the BET method,* and the device TriStar II 3020 may be used for measurement.

### 3) Primary particle size test

The primary particle size was measured by observing particles in scanning electron microscopy (SEM) images at 3000× magnification, where the longest dimension of each particle was measured (for regular spherical particles, the diameter was measured; for irregular particles, the longest length in the reverse direction was measured). About 300 particles were measured, and the average value was calculated to determine the size of the primary particle.

### 4) Compaction density calculation

The compaction density of the positive electrode plate can be calculated by the formula PD = M / (d × A), where M represents the mass of a small circular sample with a diameter of 40 mm and can be obtained by averaging measurements from 10 independent weighings; d represents the thickness of the positive electrode plate after cold pressing, and its numerical value can be obtained by averaging thickness measurements of several 40 mm-diameter circular samples; and A represents the area of the 40 mm small circular sample.

### 5) Test of elongation in length direction

The elongation of the positive electrode plate in the length direction after cold pressing can be calculated by the formula ΔEL% = (L2 - L1) / L1 × 100%, where L1 represents the marked length before cold pressing and is generally fixed at 100 mm, and L2 represents the distance of the marked length L1 after cold pressing.

### 6) Energy density test

Capacity test of the battery cell: The battery cell was allowed to stand at 25 °C for 2 h to ensure that the temperature of the battery cell was 25 °C. At 25 °C, the battery cell was charged at 0.1 C to a charge cut-off voltage, and constant-voltage charging was continued at the charge cut-off voltage until the current reached 0.05 C, at which point charging was terminated (where C represents the rated capacity of the battery cell). The battery cell was allowed to stand at 25 °C for 1 h, and the battery cell was discharged at 25 °C at 0.1 C to a discharge cut-off voltage. The total discharge capacity of the battery cell was recorded as C0, and the total discharge energy was recorded as E0.

Battery cell weight measurement: The battery cell was placed on an electronic balance until the weight stabilized, and the battery cell weight M0 was recorded.

Energy density calculation: The energy density of the battery cell was calculated as the battery cell discharge energy E0divided by the battery cell weight M0.

### 7) Test of number of cycles

(1) The full battery was allowed to stand in a constant temperature chamber at 45 °C for 30 min and then discharged at a constant current of 0.33 C to 2.8 V; (2) the full battery was allowed to stand for 5 min and charged to 4.25 V at a constant current of 0.33 C, and then the battery was charged to 4.25 V at a constant voltage of 0.05 C and allowed to stand for 5 min; (3) the battery was discharged to 2.8 V at a constant current of 0.33 C, at which point the numerical value of the capacity was read and recorded as the initial capacity C0. Steps (2) and (3) were repeated to obtain the second cycle capacity data C1 and the cycle retention rate was calculated as C1 divided by C0. The number of test cycles at which the cycle retention rate reached 80% was defined as the number of cycles.

The parameter and performance test results of the positive electrode plate and the secondary battery in each of the above examples and comparative examples are shown in Tables 1, 2, and 3 below. In the following tables, A represents the agglomerated positive electrode material, and B represents the quasi-single crystalline positive electrode material.

It should be noted that since there may be some fluctuations in the results of multiple particle size tests of the same material, the slight fluctuation (e.g., ± 0.1 µm) of the particle size in the examples of the present application falls within the allowable error range. Similarly, slight fluctuations of the BET specific surface area (e.g., ± 0.01 m²/g) of the same positive electrode material also fall within the normal error range.

**Table 1**

| Item | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Positive | A- | 12 | 8.2 | 12 | 12 | 12 | 12 | 12 | 12 | 12 | 12 |
| electrode plate | Dv50(µm) | | | | | | | | | | |
| | A-Primary particle size (µm) | 0.4 | 0.41 | 0.2 | 0.39 | 0.42 | 0.41 | 0.4 | 0.39 | 0.41 | 0.4 |
| | A-SPAN | 1.25 | 1.25 | 1.24 | 1.39 | 1.25 | 1.24 | 1.25 | 1.24 | 1.26 | 1.25 |
| | A-M element | Mn | Mn | Mn | Mn | Mn | Mn | Mn | Mn | Mn | Mn |
| | A-y value | 0.93 | 0.93 | 0.93 | 0.93 | 0.98 | 0.93 | 0.93 | 0.93 | 0.93 | 0.93 |
| | ABET(m²/g) | 0.56 | 0.56 | 0.55 | 0.558 | 0.559 | 0.78 | 0.563 | 0.562 | 0.56 | 0.561 |
| | B-Dv50(µm) | 3 | 3 | 3 | 3 | 3 | 3 | 3.8 | 3 | 3 | 3 |
| | B-Primary particle size (µm) | 1.2 | 1.2 | 1.2 | 1.2 | 1.2 | 1.2 | 1.2 | 0.9 | 1.2 | 1.2 |
| | B-SPAN | 1.35 | 1.35 | 1.35 | 1.35 | 1.35 | 1.35 | 1.35 | 1.35 | 1.47 | 1.35 |
| | B-M' element | Mn | Mn | Mn | Mn | Mn | Mn | Mn | Mn | Mn | Mn |
| | B-y value | 0.91 | 0.91 | 0.91 | 0.91 | 0.91 | 0.91 | 0.91 | 0.91 | 0.91 | 0.97 |
| | B-BET(m²/g) | 1.05 | 1.05 | 1.05 | 1.05 | 1.05 | 1.05 | 1.05 | 1.05 | 1.05 | 1.05 |
| | Mixing ratio of A to B | 7:3 | 7:3 | 7:3 | 7:3 | 7:3 | 7:3 | 7:3 | 7:3 | 7:3 | 7:3 |
| | Mixing-SPAN | 1.78 | 1.78 | 1.78 | 1.78 | 1.78 | 1.78 | 1.78 | 1.78 | 1.78 | 1.78 |
| | Mixing-BET (m²/g) | 0.66 | 0.661 | 0.6 | 0.66 | 0.659 | 0.658 | 0.66 | 0.66 | 0.659 | 0.658 |
| | Compaction density (g/cm³) | 3.7 | 3.7 | 3.7 | 3.7 | 3.7 | 3.7 | 3.7 | 3.7 | 3.7 | 3.7 |
| Secondary battery | Negative electrode silicon-based material content (%) | 30 | 30 | 30 | 30 | 30 | 30 | 30 | 30 | 30 | 30 |
| | Energy density (Wh/kg) | 470 | 459 | 482 | 429 | 420 | 419 | 443 | 459 | 486 | 498 |
| | Number of cycles (cycles) | 850 | 870 | 800 | 850 | 800 | 820 | 850 | 790 | 840 | 780 |

**Table 2**

| Item | | Example 11 | Example 12 | Example 13 | Example 14 | Example 15 | Example 16 | Example 17 | Example 18 | Example 19 | Example 20 |
|---|---|---|---|---|---|---|---|---|---|---|---|
| Positive electrode plate | A-Dv50(µm) | 12 | 12 | 12 | 12 | 12 | 14.9 | 9.5 | 9.5 | 9.5 | 9.5 |
| | A-Primary particle size (µm) | 0.41 | 0.4 | 0.39 | 0.4 | 0.41 | 0.3 | 0.13 | 0.3 | 0.56 | 0.3 |
| | A-SPAN | 1.24 | 1.24 | 1.25 | 1.24 | 1.26 | 0.72 | 1.33 | 1.33 | 1.33 | 1.33 |
| | A-M element | Mn | Mn | Mn | Mn | Mn | Mn | Mn | Mn | Mn | Mn |
| | A-y value | 0.93 | 0.93 | 0.93 | 0.93 | 0.93 | 0.94 | 0.94 | 0.94 | 0.94 | 0.94 |
| | A-BET(m²/g) | 0.559 | 0.558 | 0.559 | 0.561 | 0.562 | 0.3 | 0.2 | 0.45 | 0.45 | 0.45 |
| | B-Dv50(µm) | 3 | 3 | 3 | 3 | 3 | 3.5 | 3.5 | 3.5 | 3.5 | 2.6 |
| | B-Primary particle size (µm) | 1.2 | 1.2 | 1.2 | 1.2 | 1.2 | 1.5 | 1.5 | 1.5 | 1.9 | 1.5 |
| | B-SPAN | 1.35 | 1.35 | 1.35 | 1.35 | 1.35 | 1.44 | 1.44 | 1.44 | 1.44 | 1.44 |
| | B-M' element | Mn | Mn | Mn | Mn | Mn | Mn | Mn | Mn | Mn | Mn |
| | B-y value | 0.91 | 0.91 | 0.91 | 0.91 | 0.91 | 0.92 | 0.92 | 0.92 | 0.92 | 0.92 |
| | B-BET(m²/g) | 0.85 | 1.05 | 1.05 | 1.05 | 1.05 | 0.9 | 0.83 | 1.14 | 0.9 | 1.26 |
| | Mixing ratio of A to B | 7:3 | 8:2 | 7:3 | 7:3 | 7:3 | 65:35 | 75:25 | 7:3 | 8:2 | 7:3 |
| | Mixing-SPAN | 1.78 | 1.78 | 2.03 | 1.78 | 1.78 | 1.55 | 1.9 | 1.9 | 1.9 | 2.07 |
| | Mixing-BET (m²/g) | 0.661 | 0.662 | 0.66 | 0.52 | 0.659 | 0.53 | 0.53 | 0.68 | 0.53 | 0.53 |
| | Compaction density (g/cm³) | 3.7 | 3.7 | 3.7 | 3.7 | 3.7 | 3.7 | 3.7 | 3.7 | 3.7 | 3.7 |
| Secondary battery | Negative electrode silicon-based material content (%) | 30 | 30 | 30 | 30 | 90 | 50 | 50 | 50 | 50 | 50 |
| | Energy density (Wh/kg) | 466 | 419 | 410 | 501 | 537 | 496 | 509 | 425 | 432 | 410 |
| | Number of cycles (cycles) | 900 | 800 | 780 | 820 | 750 | 780 | 720 | 790 | 820 | 850 |

**Table 3**

| Item | Comparative | Comparative | Comparative | |
|---|---|---|---|---|
| | | Example 1 | Example 2 | Example 3 |
| Positive electrode plate | A-Dv50(µm) | 9 | 9 | - |
| | A-Primary particle size (µm) | 0.2 | 0.2 | - |
| | A-SPAN | 1.2 | 1.2 | - |
| | A-M element | Mn | Mn | - |
| | A-y value | 0.94 | 0.94 | - |
| | A-BET(m²/g) | 0.45 | 0.45 | - |
| | B-Dv50(µm) | 3.3 | - | 3.3 |
| | B-Primary particle size (µm) | 0.7 | - | 1.2 |
| | B-SPAN | 1.4 | - | 1.4 |
| | B-M' element | Mn | - | Mn |
| | B-y value | 0.93 | - | 0.93 |
| | B-BET(m²/g) | 0.95 | - | 0.95 |
| | Mixing ratio of A to B | 8:2 | - | - |
| | Mixing-SPAN | 1.94 | - | - |
| | Mixing-BET (m²/g) | 0.61 | - | - |
| | Compaction density (g/cm³) | 3.7 | 3.55 | 3.55 |
| Secondary battery | Negative electrode silicon-based material content (%) | 40 | 40 | 40 |
| | Energy density (Wh/kg) | 410 | 342 | 358 |
| | Number of cycles (cycles) | 690 | 620 | 780 |

From the data in the above tables, it can be seen that:
The secondary batteries of Examples 1 to 20 of the present application have high energy density, good cycle performance, and excellent overall performance. The primary particle size of the quasi-single crystalline positive electrode material in the positive electrode active material in Comparative Example 1 is not within the scope of the present application. In Comparative Example 2, only the agglomerated positive electrode material was used as the positive electrode active material and no quasi-single crystalline positive electrode material was used. In Comparative Example 3, only the quasi-single crystalline positive electrode material was used as the positive electrode active material and no agglomerated positive electrode material was used. The overall performance of the secondary batteries of Examples 1 to 20 of the present application was significantly superior to that of Comparative Examples 1, 2, and 3.

The secondary battery of Example 7 of the present application differed from that of Example 1 primarily in the Dv50 of the quasi-single crystalline positive electrode material. The Dv50 of the quasi-single crystalline positive electrode material in Example 7 was 3.8, and the Dv50 of the quasi-single crystalline positive electrode material in Example 1 was 3. The cycle performance of the secondary batteries in both examples was comparable; however, the energy density of the secondary battery in Example 1 was higher.

The secondary battery of Example 8 of the present application differed from that of Example 1 primarily in the primary particle size of the quasi-single crystalline positive electrode material. The primary particle size of the quasi-single crystalline positive electrode material in Example 8 was 0.9, and the primary particle size of the quasi-single crystalline positive electrode material in Example 1 was 1.2. The energy density and cycle performance of the secondary battery of Example 1 were both significantly improved compared to that of Example 8.

The secondary battery of Example 12 of the present application differed from that of Example 1 primarily in the mixing ratio of the agglomerated positive electrode material to the quasi-single crystalline positive electrode material. The mixing ratio of the agglomerated positive electrode material to the quasi-single crystalline positive electrode material in Example 12 was 8:2, and the mixing ratio of the agglomerated positive electrode material to the quasi-single crystalline positive electrode material in Example 1 was 7:3. The energy density and cycle performance of the secondary battery of Example 1 were both significantly improved compared to that of Example 12.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

## Claims

1. A secondary battery, comprising a positive electrode plate, wherein a positive electrode active material is disposed on the positive electrode plate, and the positive electrode active material comprises an agglomerated positive electrode material and a quasi-single crystalline positive electrode material;
a volume average particle size Dv50 of the agglomerated positive electrode material is 8 µm to 15 µm, and a primary particle size of the agglomerated positive electrode material is 0.1 µm to 0.6 µm;
a volume average particle size Dv50 of the quasi-single crystalline positive electrode material is 2.5 µm to 4 µm, and a primary particle size of the quasi-single crystalline positive electrode material is 0.8 µm to 2 µm;
a mass ratio of the agglomerated positive electrode material to the quasi-single crystalline positive electrode material is greater than or equal to 1.

2. The secondary battery according to claim 1, wherein the mass ratio of the agglomerated positive electrode material to the quasi-single crystalline positive electrode material is 1-9:1, optionally 2.3-3:1.

3. The secondary battery according to claim 1 or 2, wherein the volume average particle size Dv50 of the quasi-single crystalline positive electrode material is 3 µm to 3.5 µm, and/or the primary particle size of the quasi-single crystalline positive electrode material is 1.2 µm to 1.5 µm.

4. The secondary battery according to any one of claims 1 to 3, wherein the primary particle size of the agglomerated positive electrode material is 0.2 µm to 0.4 µm.

5. The secondary battery according to any one of claims 1 to 4, wherein a chemical formula of the agglomerated positive electrode material is Liₓ₁Ni_{y1}Co_{z1}M_{1-y1-z1}O₂, wherein 0.9 ≤ x1 ≤ 1, 0.9 ≤ y1 ≤ 0.98, 0.05 ≤ z1 ≤ 0.1, and M comprises one or more of Mn, Al, B, Zr, Sr, Y, Sb, W, Ti, Mg, and Nb;
optionally, 0.9 ≤ y1 ≤ 0.96.

6. The secondary battery according to claim 5, wherein a chemical formula of the quasi-single crystalline positive electrode material is Liₓ₂Ni_{y2}Co_{z2}M'_{1-y2.z2}O₂, wherein 0.9 ≤ x2 ≤ 1, 0.9 ≤ y2 ≤ 0.98, 0.05 ≤ z2 ≤ 0.1, and M' comprises one or more of Mn, Al, B, Zr, Sr, Y, Sb, W, Ti, Mg, and Nb;
optionally, 0.92 ≤ y2 ≤ 0.98.

7. The secondary battery according to claim 6, wherein y2 > y1.

8. The secondary battery according to any one of claims 1 to 7, wherein a particle size distribution span (Dv90-Dv10)/Dv50 of the agglomerated positive electrode material is ≤ 1.5, optionally 0.7 to 1.4.

9. The secondary battery according to any one of claims 1 to 8, wherein a BET specific surface area of the agglomerated positive electrode material is 0.2 m²/g to 0.8 m²/g, optionally 0.3 m²/g to 0.6 m²/g.

10. The secondary battery according to any one of claims 1 to 9, wherein a particle size distribution span (Dv90-Dv10)/Dv50 of the quasi-single crystalline positive electrode material is ≥ 1.2, optionally 1.3 to 1.5.

11. The secondary battery according to any one of claims 1 to 10, wherein a BET specific surface area of the quasi-single crystalline positive electrode material is 0.8 m²/g to 1.3 m²/g, optionally 0.85 m²/g to 1.15 m²/g.

12. The secondary battery according to any one of claims 1 to 11, wherein the particle size distribution span (Dv90-Dv10)/Dv50 of the positive electrode active material is 1.5 to 2.1.

13. The secondary battery according to any one of claims 1 to 12, wherein the BET specific surface area of the positive electrode active material is 0.5 m²/g to 0.7 m²/g.

14. The secondary battery according to any one of claims 1 to 13, wherein a mass percentage of the positive electrode active material in a positive electrode film layer of the positive electrode plate is 95% to 99.5%.

15. The secondary battery according to any one of claims 1 to 14, wherein a coating surface density of the positive electrode active material on the positive electrode plate is 21.5 mg/cm² to 32.5 mg/cm².

16. The secondary battery according to any one of claims 1 to 15, further comprising a negative electrode plate, wherein a negative electrode active material is disposed on the negative electrode plate, and a mass percentage of a silicon-based material in the negative electrode active material is 20% to 100%.

17. An electric device, comprising the secondary battery according to any one of claims 1 to 16.
